# EUROPEAN PATENT SPECIFICATION

(11) **EP 1 097 583 B1**
(45) Date of publication and mention of the grant of the patent: **24.09.2003**
(21) Application number: 99931406.5
(22) Date of filing: 20.07.1999
(51) Int. Cl.: H04N 7/16, H04N 5/445, H04N 7/173

(54) **NAVIGATION SYSTEM FOR A MULTICHANNEL DIGITAL TELEVISION SYSTEM**
NAVIGATIONSSYSTEM FÜR EIN MULTIKANAL- DIGITALFERNSEHSYSTEM
SYSTEME DE NAVIGATION POUR SYSTEME DE TELEVISION NUMERIQUE A PLUSIEURS CANAUX

(30) Priority: 20.07.1998 EP 98401837
(43) Date of publication of application: 09.05.2001
(73) Proprietor: Canal+ Technologies, 75015 Paris (FR)
(72) Inventor: AGASSE, Bernard, Les Raynes Brunes, 95610 Eragny/Oise (FR)
(74) Representative: Santarelli
(86) International application number: PCT/IB99/01350
(87) International publication number: WO 00/005886

(56) References cited:
- EP-A- 0 746 152
- WO-A-97/02701
- WO-A-97/42763
- US-A- 5 574 494
- US-A- 5 585 866
- "INTEGRATED AUDIO-GRAPHICS USER INTERFACE" IBM TECHNICAL DISCLOSURE BULLETIN, vol. 33, no. 11, 1 April 1991 (1991-04-01), pages 368-371, XP000110434

## Description

The present invention relates to a multichannel digital television system and, in particular, aspects of a system relating to navigation between channels.

One of the advantages of digital television lies in the number of channels that are available in such systems and the flexibility that is available to the television service provider regarding what channel choices may be made available to a subscriber of the service. Other than a standard set of subscription channels, the system may also include other access controlled channels such as, for example, a pay-per-view channel enabling a subscriber to pay for a particular film, sporting event etc.

In addition, the digital television system may allow access by the viewer to a number of other interactive type services, such as text based programme guides, weather maps etc. These services may be associated with dedicated digital television channels used to carry the information. Other additional menu based services may be provided enabling a user to access certain basic information in a series of pull down menus whilst watching a broadcast programme. These services operate using so-called "pilot" information carried in the same channel as a normal audiovisual channels.

Whilst the viewer benefits from the increased choice available, the large numbers of channels and services that are available may prove distracting and, in practice, a viewer may often have difficulty managing the viewing possibilities available. In addition, existing navigation tools often fail to handle correctly the interface between the navigator and access controlled channels, some of which may not be available to a particular user.

US 5,585,866 describes an electronic program schedule system having virtual channels which includes a receiver for receiving broadcast television programs for a plurality of television channels and a tuner for tuning a television receiver to a selected one of the plurality of channels. A data processor receives and stores in a memory television program schedule information. A remote controller is utilized by a viewer to choose user control commands and transmit signals in response to the data processor which receives the signals in response to user control commands. A television receiver is used to display the television programs and virtual channel programming. A video display generator receives video control commands from the data processor and generates and displays a plurality of virtual channels, each virtual channel being accessible as a channel and associated with a service delivered on a subset of the channels.

WO97/42763 describes a system and method for displaying an electronic program schedule guide. The system has areas for displaying program schedule information, and areas that may be used for advertising programs, products or services. In another embodiment, the system has areas for displaying messages to the user.

EP 0,746,152 describes a video display, which may be a television receiver with associated set top device, with an associated remote control which controls modification of the visual images displayed. By use of the remote control, a user may cause a processor controlling the video display to control the display of menus and the like. Menus are displayed as overlays onto a live motion video image. A display controller and video reception circuitry cooperate for displaying full motion video visual images occupying substantially the entirety of a viewable screen area and a menu display occupying a minor portion of the screen area and overlaying the full motion video visual images.

According to the present invention there is provided a digital television system comprising a decoder for receiving a plurality of channels comprising at least one channel and a service channel, and a display, the decoder comprising:
means for generating a service menu for display on said display superimposed over a programme transmitted on one of said received channels, said service menu comprising a list of a plurality of services available to a user;
characterised in that said generating means is arranged to generate, upon user selection of one of said listed services from the service menu, at least one subsidiary menu for display on said display superimposed over said programme together with only the selected one of said listed services to provide the user with a plurality of options for accessing at least one of said received channels.

The advantage of a single service menu and an arborescence of one or more subsidiary menus lies in the provision of a single point of access to all channels and service channels accessible to the user. Organising the channels in a series of subsidiary menus enables information to be grouped in an efficient manner behind the main service menu. As the decoder is adapted to display the service menu and subsidiary menu or menus superimposed over information transmitted on one or more channels or service channels, in this way the user may navigate the service and sub-menus whilst continuing to watch a programme transmitted on a given channel.

In one embodiment, access to one or more channels or service channels proceeds via at least a second subsidiary menu accessible via the first subsidiary menu. The use of a multiple hierarchy of service menus is particularly advantageous in organising a large number of channels in a rational manner. In some cases, for example, where there are only a limited number of channels, a single hierarchy layer of subsidiary menus immediately behind the main service menus may be sufficient.

Advantageously, the decoder is adapted to access a service channel at a particular display screen within that service channel in dependence on the option chosen within a subsidiary menu. For example, in the case of a service channel carrying an electronic programme guide, a user may navigate a number of sub-menus specifying what information he is interested in, after which the decoder changes channel and jumps immediately to the page of the programme guide of the most interest to the user. This is particularly advantageous where the service and subsidiary menus are superimposed over a transmission as will be described below, since the step of changing channel is reserved until the last moment.

In this context, the term "service channel" is used to refer to those digital channels dedicated to carrying text and/or static image data such as, for example, a digital channel or channels that carry data used by the decoder to assemble a full electronic programme guide, or a channel dedicated to providing a shopping catalogue or the like. The term "channel" is inclusive of this term and also includes the more standard real-time broadcast audiosivual programme channels.

In one embodiment, the information contained in the service and subsidiary menus may be largely unchanging, for example, comprising a list of channel choices that do not change on a day to day basis. Preferably, however, the service menu and subsidiary menus further comprise regularly updated information broadcast together with the channel or service channel information over which the menus are superimposed.

This information can include basic pilot information representing a minimum of information regarding forthcoming programmes etc. and which may be displayed in the service and subsidiary menus without having to re-tune the decoder to a dedicated electronic programme guide channel. In order to provide a uniform menu interface across all channels, the digital television system preferably further comprises transmission means in particular adapted to broadcast update information for the service menu or menus on substantially all channels and service channels.

Preferably, the digital television system further comprises a remote control handset associated with the decoder, the decoder being adapted to display the service menu in response to the touch of a single dedicated key on the handset.

The present invention also provides a method of accessing at least one of a plurality of received channels comprising at least one channel and a service channel of a digital television system, said method comprising the steps of:
generating a service menu for display on a display superimposed over a programme transmitted on one of said received channels, said service menu comprising a list of a plurality of services available to a user; said method being characterised by:
   generating, upon user selection of one of said listed services from the service menu, at least one subsidiary menu for display on said display superimposed over said programme together with only the selected one of said listed services to provide the user with a plurality of options for accessing at least one of said received channels.

Features described above relating to apparatus aspects of the present invention can also be applied to method aspects, and vice versa.

As used herein, the term "digital television system" includes any transmission system for transmitting or broadcasting for example primarily audiovisual or multimedia digital data. Whilst the present invention is particularly applicable to a broadcast based digital television system, the invention may also be applicable to a fixed telecommunications network for multimedia internet applications, to a closed circuit television network, and so on. The term equally includes a system using any satellite, terrestrial, cable or other communication link.

The term "decoder" or "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser or a video recorder or a television.

There will now be described, by way of example only, a preferred embodiment of the present invention, with reference to the attached figures, in which:
Figure 1 shows a digital television system as may be adapted according to the present invention;
Figure 2 shows an overview of the elements of a decoder for use in a digital television system;
Figure 3 shows a handset remote control for use with the decoder of Figure 2;
Figure 4 shows a scrolling sequence of screen displays associated with a main service menu;
Figure 5 shows a sequence of screen displays associated with selection of a first and second layer of subsidiary menus within the main service menu;
Figure 6 shows a further sequence of screen displays associated with selection of subsidiary menus within the main service menu;
Figure 7 shows a sequence of screen displays associated with selection of sub-menus and change of channel to a dedicated programme guide channel;
Figure 8 shows a sequence of screen displays associated with a mosaic or grille of channels;
Figure 9 shows the elements of a transmission system associated with the generation of the mosaic of Figure 8;
Figure 10 shows a sequence of screen displays associated with a dedicated overview or guide channel; and
Figure 11 shows a sequence of screen displays associated with the activation of the service menu within the guide channel of Figure 10.

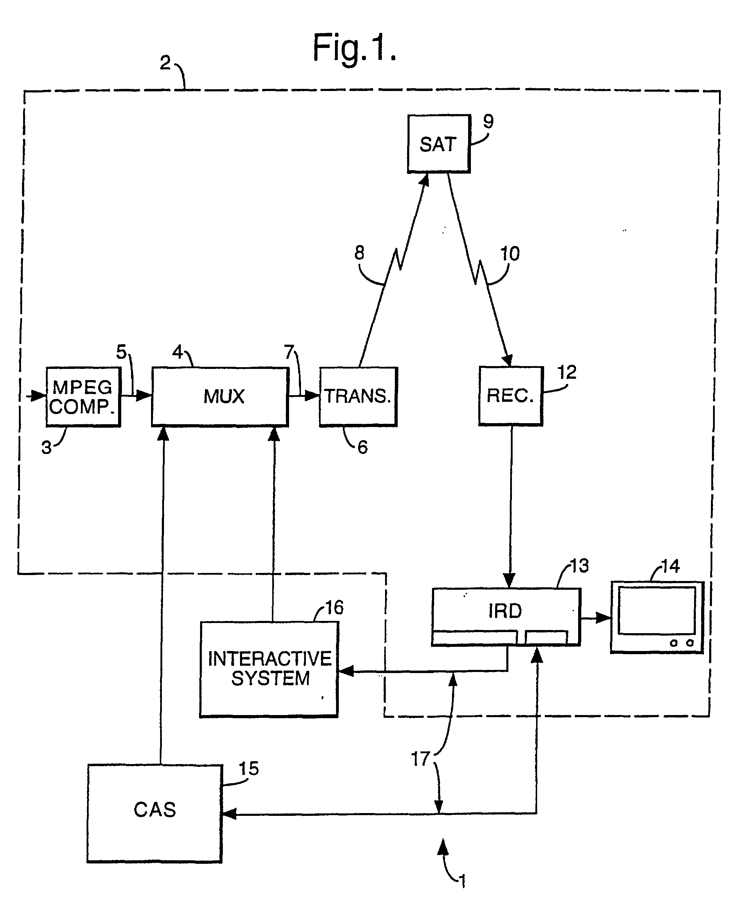

An overview of a digital television system 1 according to the present invention is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video or audio signals). The compressor 3 is connected to a multiplexer and scrambler 4 by a linkage 5.

The multiplexer 4 receives a plurality of further input signals, assembles one or more transport streams and transmits compressed digital signals to a transmitter 6 of the broadcast centre via a linkage 7, which can of course take a wide variety of forms including telecommunications links. In this example, the transmitter 6 transmits electromagnetic signals via uplink 8 towards a satellite transponder 9, where they are electronically processed and broadcast via a notional downlink 10 to earth receiver 12, conventionally in the form of a dish owned or rented by the end user. The signals received by receiver 12 are transmitted to an integrated receiver/decoder 13 owned or rented by the end user, and connected to the end user's television set 14. The decoder 13 decodes the compressed MPEG-2 signal into a television signal for the television set 14.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels and interlaced with the transmitted digital audio and video information.

A conditional access system 15 is connected to the multiplexer 4 and the receiver/decoder 13, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the decoder 13 and smartcard, the end user may purchase commercial offers in either a subscription mode or a pay-per-view mode.

As mentioned above, programmes transmitted by the system are scrambled at the multiplexer 4, the conditions and encryption keys applied to a given transmission being determined by the access control system 15. Transmission of scrambled data in this way is well-known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the decoder 13 having access to an equivalent of the exploitation key stored on a smart card inserted in the decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

An interactive system 16, also connected to the multiplexer 4 and the receiver/decoder 13 and again located partly in the broadcast centre and partly in the decoder, enables the end user to interact with various applications via a modem back channel 17. The modem back channel may also be used for communications used in the conditional access system 15. An interactive system may be used, for example, to enable the viewer to communicate immediately with the transmission centre to demand authorisation to watch a particular event, download an application etc.

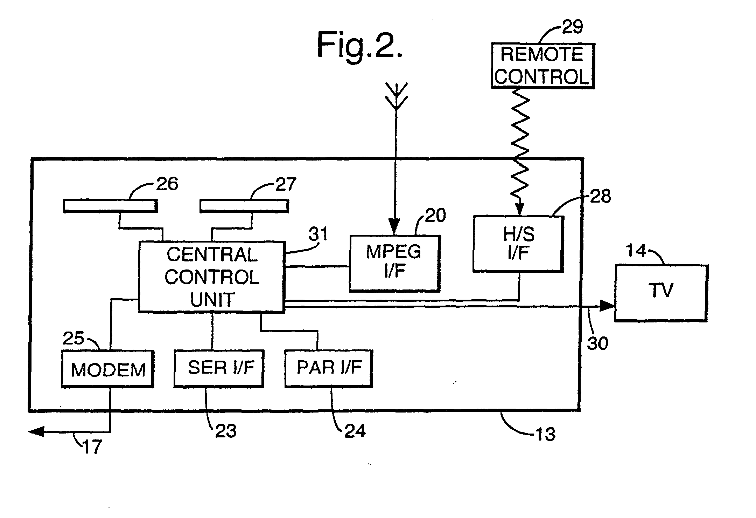

Referring to Figure 2, the elements of the receiver/decoder 13 or set-top box adaptable to be used in the present invention will now be described. As will be understood, the elements of this decoder are largely conventional and their implementation will be within the capabilities of one skilled in the art.

As shown, the decoder 13 is equipped with several interfaces for receiving and transmitting data, in particular an MPEG tuner and demultiplexer 20 for receiving broadcast MPEG transmissions, a serial interface 23, a parallel interface 24, and a modem 25 for sending and receiving data via the modem channel 17. In this embodiment, the decoder also includes a first and second smart card reader 26 and 27, the first reader 26 for accepting a subscription smart card containing decryption keys associated with the system and the second reader 27 for accepting bank cards or other specialised cards.

The decoder also includes a receiver 28 for receiving infra-red control signals from a handset remote control 29 and a Peritel output 30 for sending audiovisual signals to the television 14 connected to the decoder.

Processing of data within the decoder is handled by a central control unit 31. The software architecture of the control unit may correspond to that used in a known decoder and will not be described here in any detail. It may be based, for example, on a virtual machine interacting via an interface layer with a lower level operating system implemented in the hardware components of the decoder. In terms of the hardware architecture, the decoder will be equipped with a processor, memory elements such as ROM, RAM, FLASH memory etc. as in known decoders.

The control unit 31 may be adapted to run a number of applications defining the functionality of the decoder. An application introduced into the decoder corresponds to a section of code introduced into the machine that permits the control, for example, of higher level functions of the machine. Typical applications may include the generation of a graphic sequence on the screen of the television display in response to a command from the remote control, or the emission of a message via the decoder modem to the server associated with the digital broadcast system.

As will be later described, an application according to the present invention is adapted to generate display screens and menu information laid over or replacing the normal television display and associated with navigation between a number of channels or interactive services proposed by the system. The information displayed may comprise substantially invariable menu data and/or data updated using information contained in the MPEG transport stream of one or more channels.

Applications may be resident applications stored in the ROM or FLASH of the decoder or applications broadcast and downloaded via the MPEG interface 20 of the decoder or, indeed, any other interface of the decoder such as the serial port 23, a smart card reader 27 etc. Applications can include navigation tools, program guide applications, games, interactive services, teleshopping applications, as well as initiating applications to enable the decoder to be immediately operational upon start-up and applications for configuring the decoder.

Applications are stored in memory locations in the decoder and represented as resource files comprising graphic object description files, unit files, variables block files, instruction sequence files, application files, data files etc.

Conventionally, applications downloaded into the decoder via the broadcast link are divided into modules, each module corresponding to one ore more MPEG tables. Each MPEG table may be divided into a number of sections. In the case where data transfer also occurs via the serial and parallel ports, modules are similarly split into tables and sections, the size of the sections depending on the channel used.

In the case of broadcast transmission, modules are transported in the form of data packets within respective types of data stream, for example, a video data stream, an audio data stream, a text data stream. In accordance with MPEG standards each packet is preceded by a Packet Identifier (PID) of 13 bits, one PID for every packet transported in the MPEG stream. For a given frequency channel, one or more programme map tables (PMTs) contain a list of the different data streams within that channel and define the content of each stream by reference to its respective PID. The PMT table or tables are accessible via a principal Programme Access Table (PAT).

In a digital broadcast system, information is carried on a plurality of frequency channels of a fixed and predetermined bandwith. Within a single frequency channel, a plurality of audio and/or visual data streams may be contained. For example, a single video stream may be associated with a plurality of audio streams, dubbing the programme into a number of languages. Alternatively or in addition, multiple video streams may be contained in the packet stream associated with the frequency channel and showing, for example, the same sporting event from different camera positions. Whilst these different audio and video streams are broadcast within the same frequency channel, the viewer may perceive changing the audio/video stream within that frequency channel as corresponding to a real change of channel.

In addition to conventional audiovisual programme information, other data may be carried in a frequency channel. As will be described below, this data may include menu display information associated with up-dated programme summaries etc. The PID values of such data may again be available via a PMT table.

In order to provide a constant interface, some information is of necessity broadcast on all frequency channels. For example, the information associated with a "Pilot" type application indicating basic programme information and options available to a user may be broadcast on all frequency channels, such that a user may always call up this information, regardless of the programme or channel being watched. In this way, continuity of the interface is assured.

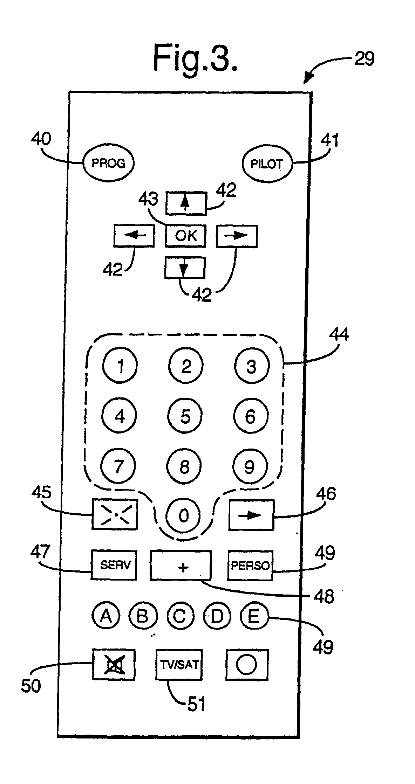

Referring to Figure 3, the set of controls associated with the remote control handset 29 of the receiver/decoder will now be described. This remote control layout corresponds to that currently supplied with the existing Canal+ Mediahighway digital decoder system. As will be understood, the response by the decoder to the activation of a particular control on the handset is programmable and may vary according to the application loaded in the decoder. Thus, while certain functions (on/off, mute etc.) are universal, others may change according to the decoder configuration.

As shown, the handset 29 includes a PROG control 40 and PILOT control 41. In the existing Canal+ Mediahighway decoder system, these controls respectively call up a programme guide listing the programmes available on each channel and a pilot application giving information regarding the programme being watched on the present channel as well as a certain amount of information regarding other programmes to be shown on this and other channels at that moment, in the near future etc.

In the context of present application, and as will be discussed below, activation of the PROG control 40 of the handset calls up a more generalised main service menu, the programme guide being accessible as an option within this menu, alongside other services such as interactive shopping applications etc. The application called up by the PILOT control 41 remains largely unchanged.

The handset further includes a set of directional navigation buttons 42 for controlling movement of an on-screen cursor within a menu display, as well as an "OK" control button 43 for selection of an item highlighted by the cursor.

A set of numerical buttons 44 enable direct selection of a numbered channel, entry of numerical data such as credit card numbers etc. The numerical controls 44 may also be associated with entry of a secondary set of data, such as the days of the week, day/night/evening etc. This data may be printed above the controls and can be used when programming a timer application, navigating a programme guide etc.

The handset 29 further includes a preference control button 45 giving access to a menu list of a limited number of preferred channels, as chosen by the user. In this way, the user can channel quickly between the channels that he or she watches the most often. The control button 46 is used to exit from an activated application or display menu.

The SERV control button 47 is used to call up a summary of the services available within an activated application, such as a users guide to a shopping application.

The "+" control button 48 gives access to a menu permitting choice of sub-titles in a number of languages and/or choice of language used in the audio soundtrack accompanying the displayed programme.

The PERSO control button 49 calls up an application enabling a user to set and personalise certain basic functions of the decoder, including the volume of the audio output from the decoder, characteristics of the video output of the decoder etc.

The A to E control buttons 49 are not generally associated with a particular type of function but may be used by certain applications and at the option of the programmer to activate particular functions such as return to a previous menu etc.

Finally, the mute control button 50 deactivates or activates the sound accompanying the displayed channel, the TV/SAT control 51 enables the user to switch between channels received via a satellite input and those received via a terrestrial antenna, and the standby button 52 enables the user to remotely switch the decoder on and off.

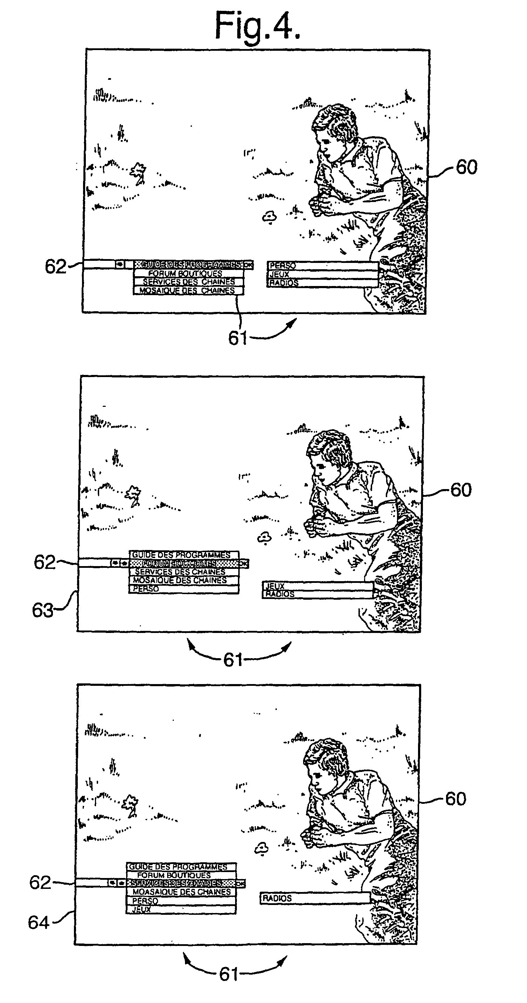

Referring to Figure 4, the service menu 61 displayed by the application upon activation of the touch PROG 40 in the present embodiment will now be described. As shown, the menu 61 comprises a list of services available to the user and is displayed superimposed over the television programme 60 broadcast on the channel in question. The list displayed may vary according to the subscription rights of the user and may equally be ordered contextually in dependence on the channel presently being watched and/or in dependence on the preferences of the user. As shown, in the present case, the menu provides access to the following groups of services:

| "Guide des Programmes" | Programme Guide |
|---|---|
| "Forum Boutiques" | Interactive shopping channel |
| "Service des Chaînes" | Specialised Service Channels |
| "Mosaïque des Chaînes" | Mosaic Channel Display (see below) |
| "PERSONNEL" | Personalised Services |
| "Jeux" | Interactive Games |
| "Radios" | Digital Radios |

The menu 61 is a thematic menu and, as will be described, is associated with an arborescence of menu choices behind the services indicated. In some cases, selection of a menu title, such as "Jeux" or "Mosaique des Chaînes", may lead directly to a change of channel. In such cases, the programme 60 shown behind the menu 61 in Figure 4 will be replaced. In other cases, such as "Guide des Programmes", "Service des Chaînes", selection of the title may lead to the display by the application of a further sub-menu superimposed over the programme presently being watched.

Of course, even after the channel has been changed, the user may be presented with a further menu choice. For example, in the case of the selection "Radios" a plurality of audio streams may be sent in the same frequency channel, the user being presented with a further visual menu to enable selection of the desired radio station within that channel. Similarly, in the case of the "Jeux" channel, the user may choose to download one of a plurality of games, all broadcast continuously in the same frequency channel.

As shown in the lower two representations of Figure 4, the service menu 61 scrolls around a fixed bar 62 in response to commands received from the navigation keys 42 of the remote control handset 29. The bar may include additional information, such as navigational arrows showing the possible directions of movement of the menu. Unlike conventional menu displays, where a movable cursor is displaced around a fixed menu display, the menu itself moves in response to the activation of the navigation keys 42.

As shown at 62, in response to a first downward navigation command the menu shifts to the title "Forum Boutiques", the previous title being displaced above the fixed bar 63 and the next title to the right of the menu scrolling over to the queue of titles on left hand side. At the same time, the menu bar 62 displays up and down navigational arrows to indicate that the menu may be scrolled in either direction.

If the user again presses a downward navigation control, the menu then scrolls to the next title "Service des Chaînes" as shown at 64. Again, the immediate title to the right of the menu moves over to the left hand queue.

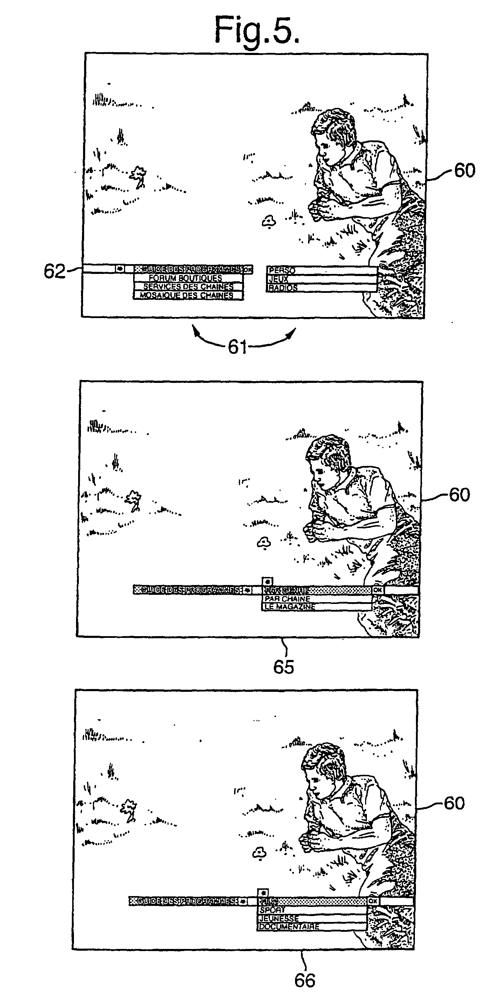

A user may select the menu title presently highlighted in the menu bar by pressing the OK control button 43 on the remote control handset. Referring to Figure 5, the user selects the "Guide des Programmes" title shown in the uppermost frame, leading to the subsidiary or sub-menu 65 shown in the second frame of Figure 5. This operation occurs over the background of the presently watched programme i.e. the channel does not change. Within the sub-menu 65, the user may choose to access information relating to forthcoming programmes classified according to their genre ("Par Genre") or according to the channel on which they are broadcast ("Par Chaîne"). The sub-menu may also include the option of accessing a full electronic programme guide ("Le Magazine").

In addition to navigation down the menu 65, as indicated by the downward arrow, a user may equally navigate backwards to the previous menu 61 using the navigation button 42 corresponding to the left facing horizontal arrow shown above the menu 65.

In the case that the user selects summary information relating to the genre of forthcoming programmes, the user will be presented with another menu 66 shown in the lowermost frame of Figure 5 and classifying programmes as relating to films, sport, youth culture, documentary etc.

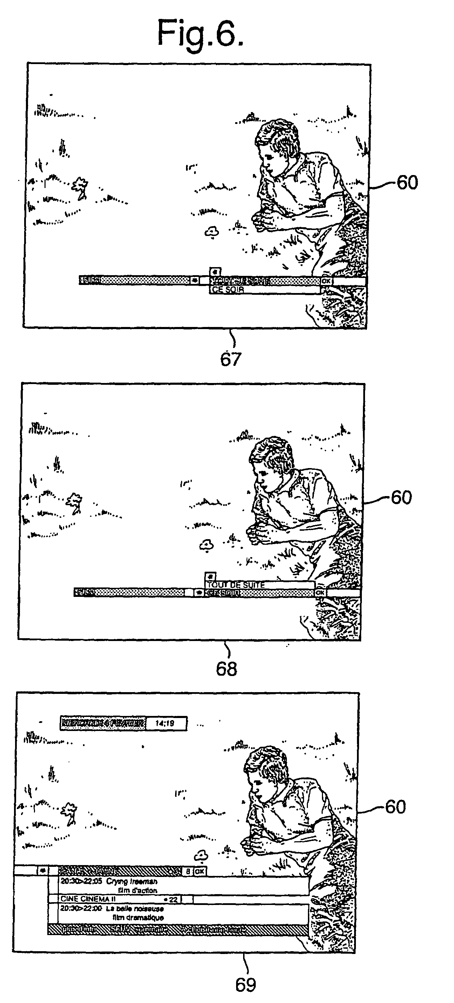

As shown in the first frame of Figure 6, the user has in this case indicated that he wishes to receive summary information regarding programmes classified as films. In this case, he is presented with a menu asking if he wishes to receive summary information regarding films immediately forthcoming ("tout de suite") or films to be shown in a later time slot ("ce soir"). As shown at 68 in the second frame, this menu is itself scrollable to a second position to select films in a later time slot.

If the user selects one of these options, the film information shown at 69 in the lower frame of Figure 6 will then be displayed. In this case, summary information regarding films shown on two of available channels in the later time slot is displayed. This display 69 may also be scrolled downwards to look at summary information relating to films displayed on other channels during this time slot.

As will be appreciated, the decoder continues to receive audiovisual information broadcast along the original channel selected by the user during all these operations and the backing display 60 continues to show the programme being broadcast on that channel. The data needed to create the menus and up to date programme summary information may be encapsulated in supplementary digital packets sent together with the audiovisual information in the packet stream of that channel. In order to enable the user to access these menus and sub-menus regardless of the channel being watched it is necessary for this data to be transmitted on substantially all channels. The data used in this case may correspond to the type of data accessible via the "Pilot" application which is available on all channels (see above).

All of the above menus and sub-menus access information available within the decoder or broadcast generally on a number of channels. In some cases, however, access to services and information via the main service menu 61 via one or more sub-menus may be associated with a change to a dedicated digital channel. For example, activation of the "Forum Boutique" or "Mosaïque des Chaînes" option in the menu bar may cause the decoder to switch to a dedicated digital channel carrying specific information.

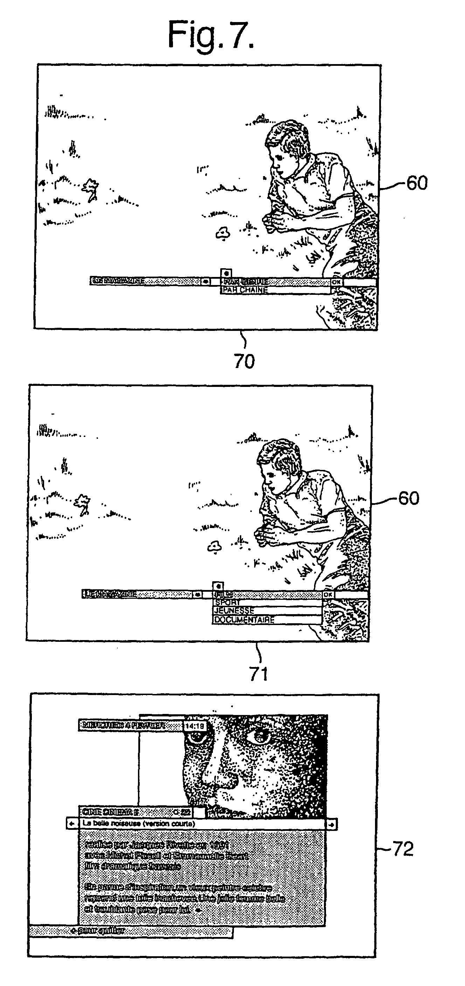

In particular, in the event that a user selects the option "Le Magazine" in the sub-menu associated with the "Guide des Programmes" (Figure 5, frames 1 and 2) the sub-menu 70 shown in the first frame in Figure 7 will be displayed. In this sub-menu, the user is presented with a choice of accessing the magazine via a thematic menu ("Par Genre") or via a channel menu ("Par Chaîne"). As will be noted, during the display of the sub-menu 70, the decoder remains tuned to the first digital channel, the sub-menu 70 being displayed superimposed over the channel display 60.

As shown in the second frame of Figure 7, if the user has picked the thematic choice "Par Genre", the sub-menu 71 will be displayed, giving the user the option to select which type of programme (film, sport, nature etc.) he wishes to read about in the magazine.

If the user then selects the genre "Film", the decoder then switches to the frequency channel containing the magazine and accesses the magazine at a page giving details of a forthcoming film, as shown at 72 in the final frame of Figure 7. As will be understood, the location of information within the transport stream on a given frequency channel is provided by the PMT etc. tables within the stream and it is a simple matter to organise certain types information into corresponding predetermined PID packets within the stream. The decoder may then directly download and display the information of interest to the user using this PID information.

In other embodiments, selection of the option "Le Magazine" may cause the decoder to switch directly to the digital channel carrying the magazine information, the user thereafter being presented with a main menu indexing the magazine contents. However, the advantage of using superimposed sub-menus to pre-select the point of access prior to a channel change is that the user jumps straight to the most relevant information at the moment that the channel changes.

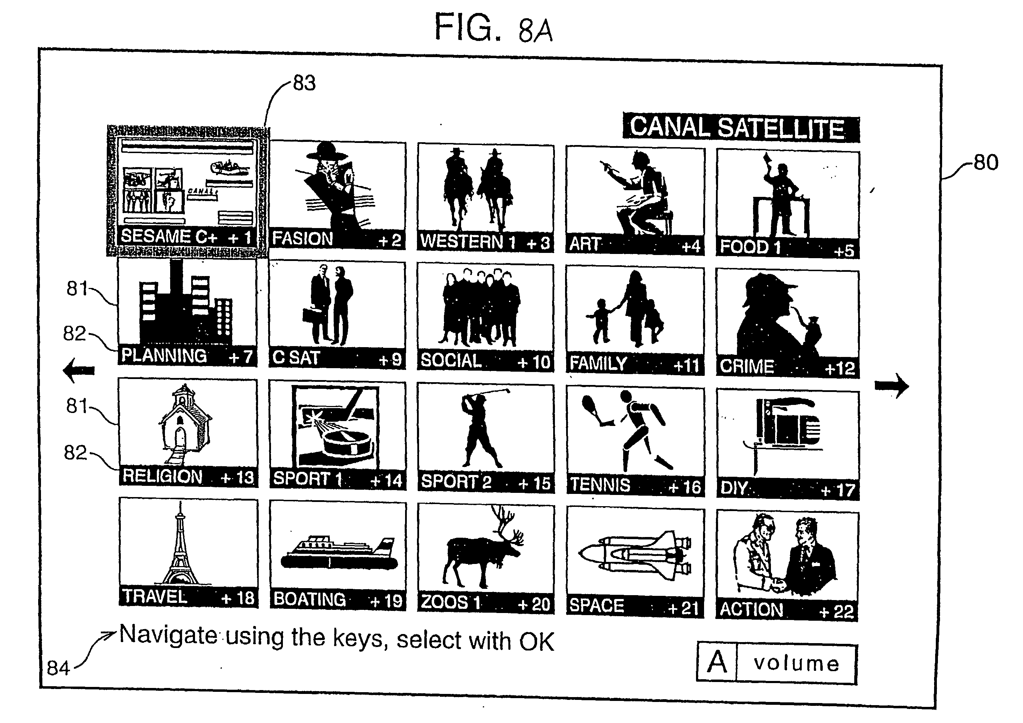

One of the services offered in the main service menu guide is a grille or mosaic showing the content of all channels currently being broadcast to the decoder. See Figure 4, "Mosaïque des Chaînes". Upon selection of this option, the decoder changes to the frequency channel associated with this service and the grille 80 shown in Figure 8A is displayed. The grille 80 is composed of a number of miniature screen display windows 81 each showing in real time the programme being shown on a channel and each including at 82 an indication of the name of the channel shown in the display window 81. The grille also includes a general information bar 84.

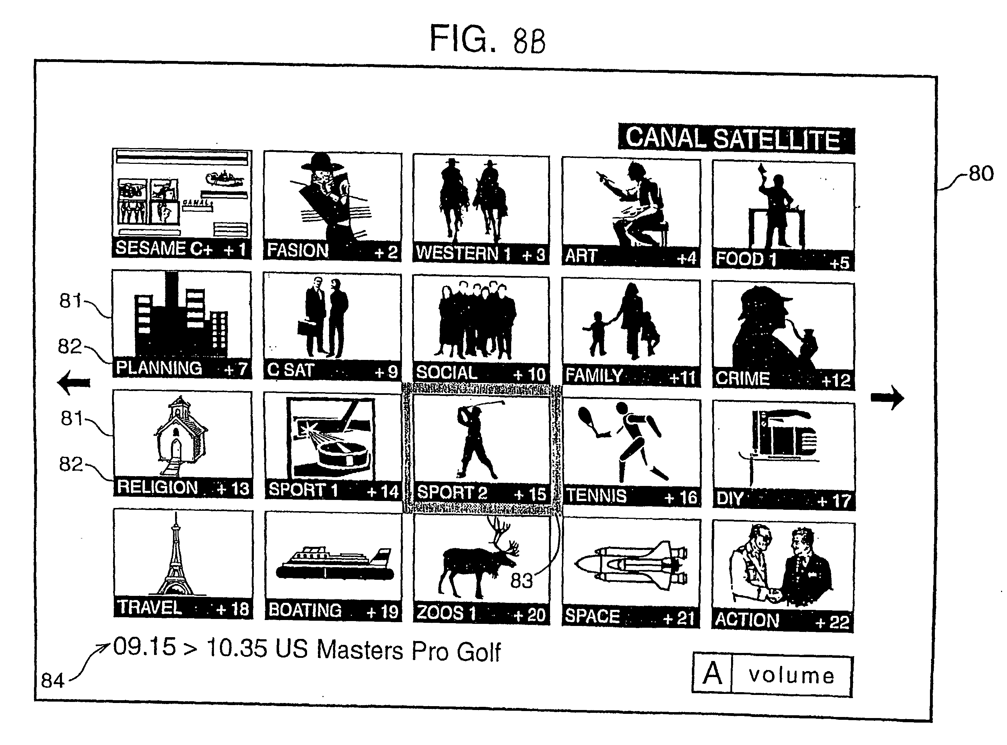

An application within the decoder generates a movable frame cursor shown at 83. This cursor may be moved horizontally and vertically using the navigation arrows of the remote control. For example, in Figure 8B, the cursor 83 has been moved to select the screen display associated with the third-down, third-across channel. The title of the programme currently being shown on this channel is displayed in the display bar 84. The decoder additionally selects and plays the audio stream associated with this channel. Pressing "OK" on the remote control then causes the decoder to zap to the chosen channel shown in that element.

The grille shown in Figure 8A displays 20 channels. In practice, up to 60 or more channels may be receivable by the decoder. In this case, access to other programme grilles may be necessary. For example, when the cursor is positioned as shown in Figure 8A, selection of the left facing navigation arrow will cause the display to change to another mosaic of 20 programmes. Similarly, when the cursor is in the right hand side, selection of the right facing navigation arrow will cause the display to change to show another programme mosaic. The programme mosaic screens may also be looped such that exit of the last mosaic screen will bring the user back to the first screen etc.

The programme mosaic shown in Figure 8A displays a selection of all programme channels broadcast to the decoder. However, in some cases, the decoder may not possess full access rights to all channels. For example, some channels may be dedicated to pay per view programming, or may require a further subscription on the part of user. In this case, it is undesirable that a user has full audio and video access to a programme, even to a reduced screen version shown in the display windows 81.

Accordingly, in one embodiment the decoder application managing the mosaic display is adapted to monitor the length of time that the frame cursor rests in one position. After a period of, for example, 30 seconds, the application will compare the access rights of the channel in question with the access rights in the decoder in order to verify whether or not a user has full access to the programme or channel display in the mosaic window.

In the event that the user does not have the necessary access rights, the frame cursor will jump to another window in this mosaic, such as the first element in the upper left hand corner of the first screen. Alternatively, the cursor may jump to a window element in a different mosaic. For a period of 5 minutes or so thereafter, the application may refuse to allow the cursor to be repositioned on the access prohibited window.

In the event that the decoder does not have the necessary access rights, other means for disabling the display are possible. For example, the application can simply act to cut the audio output after 30 seconds such that the user can no longer hear the soundtrack associated with that programme. In addition, or alternatively, the application may also act to cut the video output.

In an alternative to a time out procedure, the application can take the necessary steps to reposition the cursor and/or cut the audio output immediately the cursor rests on a window element for an access prohibited programme or channel.

In some cases, for example, where adult material is displayed, the decoder may in all cases black out the video and audio display for the programme and channel in question, such that only the channel and programme title information is displayed in the bars 84, 82. Since such material may be deleted from all mosaic displays, regardless of the decoder access rights, this step may also be carried out upstream of the decoder at the transmission end (see below).

Before or after carrying out any of the above actions, the application may propose to the user the option of paying to access the channel in question. If the user agrees, the application may change directly to the channel in question using, for example, credits stored in the subscription card of the user. Alternatively, the application may activate payment menu screens needed to allow the user to open a subscription. Such steps are standard, and will not be discussed here in any detail.

The decoder may be programmed such that the mosaic channel will always be displayed at start-up of the decoder. Additionally, whilst the cursor may also be fixed on the same channel (for example, a hyperchannel as described below) every time the decoder is activated or a user changes to the mosaic channel, other possibilities exist. For example, when activating the decoder, a mosaic may be displayed with the cursor highlighting the last channel viewed by the user. Equally, when the user changes from one channel to the mosaic channel, the mosaic screen including this channel highlighted by the cursor may be displayed, providing a sort of "zoom-out" effect from a full-screen channel display to a miniature version in one window element of the mosaic.

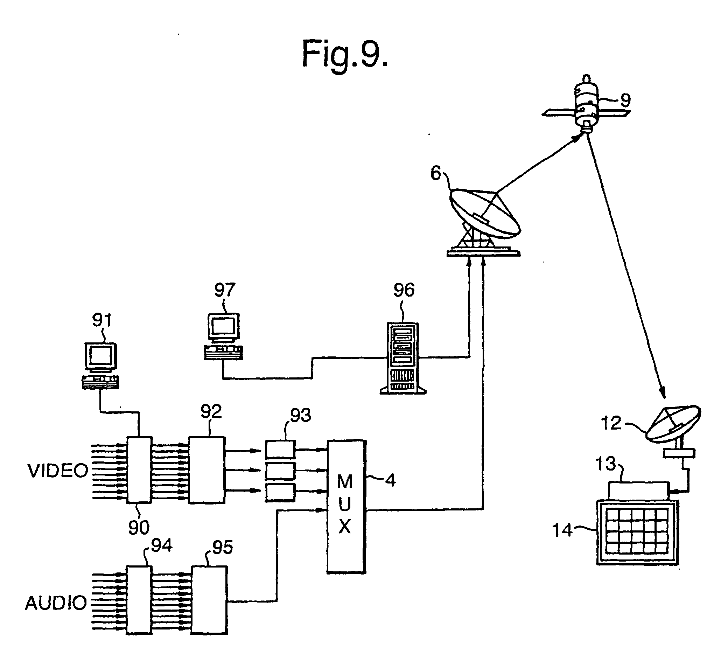

Referring to Figure 9, the architecture of the elements of the transmission system associated with the generation of the mosaic channel will now be described. Video signals from sixty channels are received by a server 90 associated with a station 91. The server 90 acts to filter out these video signals which are not to be included in the mosaic, for example, video signals associated with adult only channels etc. The processed signals then pass to a processor 92 which resizes and repositions the video signals within a screen display so as to generate the three grille or mosaic screens shown at 93, which are then fed to the multiplexer 4.

In a similar manner, audio signals from each of the channels are filtered at 94 and assembled and assigned PID values at 95 before being fed to the multiplexer 4.

In addition to the broadcast audio and visual data, further data may be introduced by an SA/DA injection server 96 and an associated work station 97. In particular, the server and station introduce configuration data relating to the configuration of the elements in the mosaic (see below) together with pilot data containing the minimum information regarding the programmes broadcast on each channel. The pilot data may correspond to that used by the "Pilot" application and will be used by the application to generate the header information bar 84 at the top of the mosaic screen.

The configuration data typically includes a description of the number of mosaics, the size and position of each screen element within each mosaic, the desired size of the frame cursor, the limits of the cursor movement. This information will be used to enable the associated decoder application to correctly position and move the frame cursor. In addition, the data includes the position of each channel in the mosaics (page number and coordinates), the PID of the associated audio soundtrack in the assembled audio stream and the channel reference in the pilot data.

In order to enable the decoder application to change directly to a desired channel the configuration data should also include the details of the channel (frequency, PID value) associated with a given element. Access details (pay per view, subscription etc.) may also be included in order to enable the decoder application to carry out the operations described above to prevent a user from watching and listening to an access prohibited channel. Finally, the configuration data includes the PID value of each mosaic page and a default header message (if any) associated with that mosaic page.

The combination of the mosaic channel and service menus described above enable a user to navigate relatively easily and conveniently between, on the one hand, television broadcast channels available and, on the other hand, particular services available on one or more service channels.

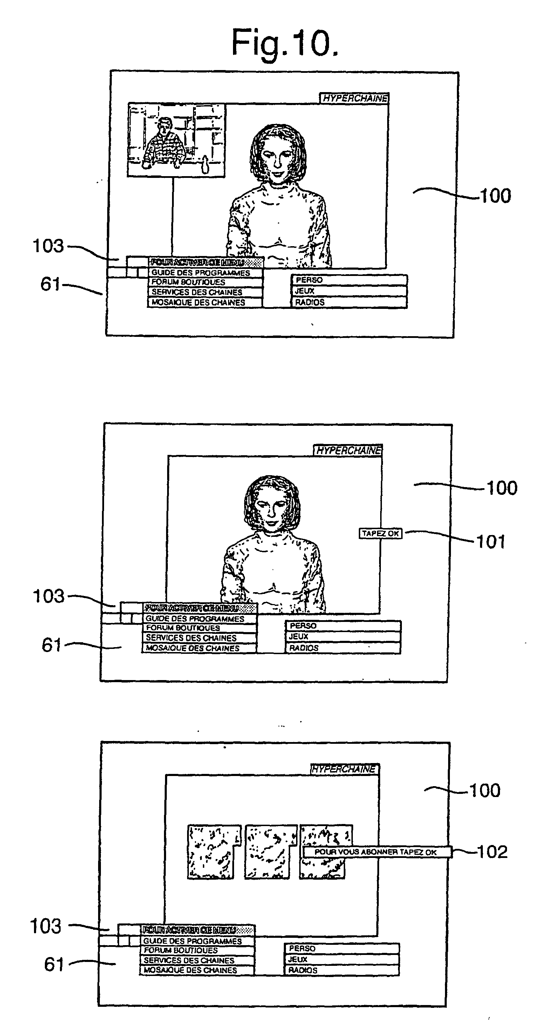

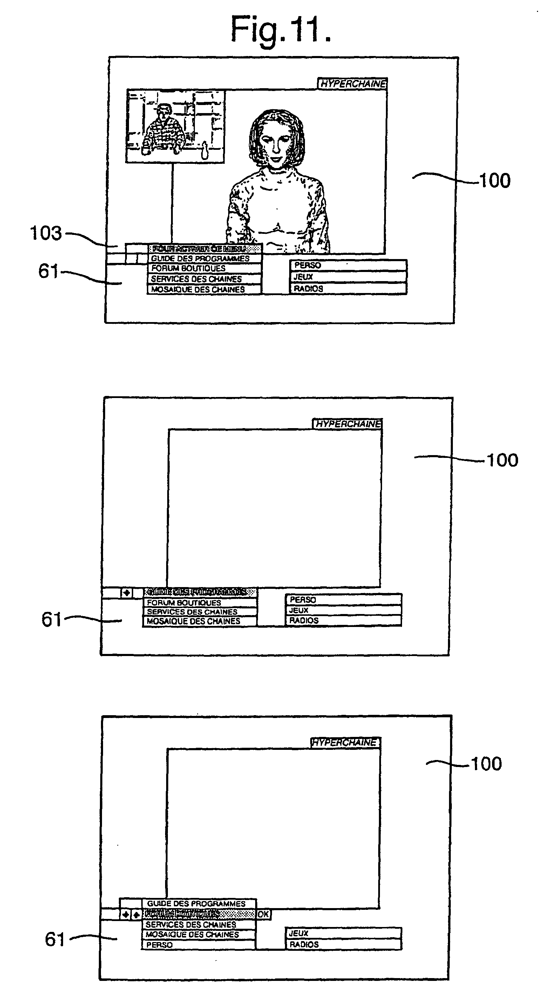

There will now be described, with reference to Figures 10 and 11, the operation of a dedicated channel adapted to provide an overview or guide to the combined services and/or channels available ("Hyperchaîne" or "hyperchannel").

Referring to Figure 10, a particularity of the mode hyperchannel is the permanent display of the service menu 61 over a broadcast audiovisual programme 100. As will be described, the broadcast programme is used to provide a "tour guide" to forthcoming programmes on some or all of the channels as well as describing the services available. The programme may comprise, for example, a pre-recorded video broadcast in rotation and changed every 24 hours or so.

Since the channel is dedicated to facilitating navigation between services and channels, the format of the service menu 61 will also be permanently displayed so as to provide a signalled starting point for electronic navigation amongst the services. Although displayed, the service menu 61 is inactive, in the sense that it is necessary to press the PROG control between 40 on the remote control before selecting or passing between the titles listed in the service menu. The inactive state of the service menu is signalled to the user by means of an additional display bar 103 above the service menu 61.

The video programme on the hyperchannel may be broadcast and displayed in synchronism with displayed interactive messages. The programme may concern, for example, a forthcoming film, the details of which are available in the electronic programme guide "Magazine". The data (channel frequency, PID value etc.) needed to access the magazine channel and, in particular, the page of the magazine on which the film is described, are transmitted concurrently with the broadcast video. In synchronism with the broadcast video, the decoder application charged with managing the hyperchannel will display an interactive request message 101 shown in the second frame of Figure 10 inviting the user to change directly to the magazine channel by pressing the "OK" button 43 on the handset. If the user presses "OK" the decoder will then automatically re-tune to the desired channel and page of the magazine.

Other interactive messages referring to available services may be used to enable the user to jump directly to the description of a product on the appropriate page of the "Forum Boutiques" shopping channel etc.

The broadcast video may equally describe a forthcoming film available on a pay per view channel. In such an example, the hyperchannel application in the decoder is adapted to synchronously generate an interactive subscription request message 102 as shown in the lowermost frame of Figure 10. In the event that the user presses "OK" on the handset, the decoder will automatically take the necessary steps to decrement a credit value or send a subscription request to a main server in order to enable the user to possess the access rights to view the film. Alternatively, or in addition, if the film is currently being shown or is about to be shown on another channel, the decoder will re-tune and change channel to the appropriate channel. Alternatively, or in addition, the decoder may set a timer to remind the user to watch the film when it occurs.

As will be understood, in view of the synchronism of the hyperchannel application with the broadcast video, and the user of the "OK" button to select services described in the hyperchannel broadcast, it is necessary to desactivate the main service menu 61 during these operations to avoid selecting a title option of the service menu when responding "OK" to an interactive message displayed in synchronism with the hyperchannel broadcast.

If the viewer presses the "PROG" button on the remote control, the service menu will thereafter become active and the instructing display bar 103 will disappear, as shown in the second frame of Figure 11. Thereafter, the user may navigate up and down the service menu using the navigation arrows 42 of the remote control and, in particular, may select a menu title using the "OK" button 43.

When the service menu 61 is in an active mode as shown in Figure 11, the hyperchannel application in the decoder will either stop displaying the interactive messages shown in Figure 10 and/or will not respond to such messages. In this configuration, the decoder responds to an "OK" signal from the remote control only to change to a sub-menu or channel indicated in the service menu or subsidiary menus.

A user may deactivate the service menu and return to responding to interactive messages synchronised with the hyperchannel broadcast by exiting from the menu using button 46 of the handset and/or by pressing the PROG button 40 for a second time.

## Claims

1. A digital television system comprising a decoder (13) for receiving a plurality of channels comprising at least one channel and a service channel, and a display (14), the decoder (13) comprising:
means (31) for generating a service menu (61) for display on said display (14) superimposed over a programme (60) transmitted on one of said received channels, said service menu (61) comprising a list of a plurality of services available to a user;
**characterised in that** said generating means (31) is arranged to generate, upon user selection of one of said listed services from the service menu, at least one subsidiary menu (65) for display on said display (14) superimposed over said programme together with only the selected one of said listed services to provide the user with a plurality of options for accessing at least one of said received channels.

2. A digital television system as claimed in claim 1, wherein the generating means (31) is arranged to vary the list of services contained in the service menu (61) according to the subscription rights of the user.

3. A digital television system as claimed in claim 1 or 2, wherein the generating means (31) is arranged to order the list of services contained in the service menu (61) according to the preferences of the user.

4. A digital television system as claimed in any preceding claim, wherein the decoder (13) comprises a receiver (28) for receiving control signals from a remote control handset (29).

5. A digital television system as claimed in claim 4, wherein the generating means (31) is arranged to generate the service menu (61) for display on said display (14) in response to the touch of a single dedicated key (40) on the handset (29).

6. A digital television system as claimed in claim 4 or 5, wherein the generating means (31) is arranged to scroll the display of the list of services contained in the service menu (61) in response to commands received from navigation keys (42) of the handset (29).

7. A digital television system as claimed in claim 6, wherein the generating means (31) is arranged to scroll the service menu (61) around a fixed bar (62) displayed on the display (14).

8. A digital television system as claimed in claim 7, wherein the fixed bar (62) includes navigational arrows showing the possible directions of movement of the service menu (61).

9. A digital television system as claimed in any preceding claim, wherein the generating means (31) is arranged to generate, upon user selection of one of the options from the subsidiary menu (65), a second subsidiary menu (66) for display on said display (14) superimposed over said programme together with the selected one of said listed services to provide the user with a plurality of further options for accessing said at least one of said received channels.

10. A digital television system as claimed in any preceding claim, wherein the decoder (13) is arranged to change the channel displayed on said display (14) in response to the selection of a particular option from a subsidiary menu (65, 66).

11. A digital television system as claimed in claim 10, wherein the decoder (13) is adapted to access from said received channels a service channel at a particular display screen within that service channel in dependence on the option chosen within a subsidiary menu (65, 66).

12. A digital television system as claimed in any preceding claim, wherein said menus (61, 65, 66) contain regularly updated information broadcast together with the programme (60) over which the menus are superimposed.

13. A digital television system as claimed in claim 12, further comprising transmission means (6) for broadcasting update information for said menus (61, 65, 6) on substantially all of said plurality of channels.

14. A method of accessing at least one of a plurality of received channels comprising at least one channel and a service channel of a digital television system, said method comprising the steps of:
generating a service menu (61) for display on a display (14) superimposed over a programme (60) transmitted on one of said received channels, said service menu (61) comprising a list of a plurality of services available to a user; said method being **characterised by**:
generating, upon user selection of one of said listed services from the service menu, at least one subsidiary menu (65) for display on said display (14) superimposed over said programme together with only the selected one of said listed services to provide the user with a plurality of options for accessing at least one of said received channels.

15. A method as claimed in claim 14, wherein the list of services contained in the service menu (61) is varied according to the subscription rights of the user.

16. A method as claimed in claim 14 or 15, wherein the list of services contained in the service menu (61) is ordered according to the preferences of the user.

17. A method as claimed in any of claims 14 to 16, wherein control signals are received from a remote control handset (29).

18. A method as claimed in claim 17, wherein the service menu (61) is generated for display on said display (14) in response to the touch of a single dedicated key (40) on the handset.

19. A method as claimed in claim 17 or 18, wherein the display of the list of services contained in the service menu is scrolled in response to commands received from navigation keys (42) of the handset (29).

20. A method as claimed in claim 19, wherein the service menu (61) is scrolled around a fixed bar (62) displayed on the display (14).

21. A method as claimed in claim 20, wherein the fixed bar includes navigational arrows showing the possible directions of movement of the service menu (61).

22. A method as claimed in any of claims 14 to 21, wherein, upon user selection of one of said options from the subsidiary menu, a second subsidiary menu (66) is generated for display on said display (14) superimposed over said programme together with the selected one of said listed services to provide the user with a plurality of further options for accessing said at least one of said received channels.

23. A method as claimed in any of claims 14 to 22, wherein the channel displayed on said display (14) is changed in response to the selection of a particular option from a subsidiary menu (65, 66).

24. A method as claimed in claim 23, wherein from the received channels a service channel is accessed at a particular display screen within that service channel in dependence on the option chosen within a subsidiary menu (65, 66).

25. A method as claimed in any of claims 14 to 24, wherein said menus (61, 65, 66) contain regularly updated information broadcast together with the programme (60) over which the menus are superimposed.

## Patentansprüche

1. Digitalfernsehsystem, das eine Decodierungseinrichtung (13) zum Empfangen einer Vielzahl von Kanälen mit zumindest einem Kanal und einem Dienstkanal und eine Anzeige (14) umfaßt, wobei die Decodierungseinrichtung (13) umfaßt:
eine Einrichtung (31) zum Erzeugen eines Dienstmenüs (61) zur über ein auf einem der empfangenen Kanäle gesendetes Programm (60) überlagerten Anzeige auf der Anzeige (14), wobei das Dienstmenü (61) eine Liste einer Vielzahl von für einen Benutzer verfügbaren Diensten umfaßt;
**dadurch gekennzeichnet, daß** die Erzeugungseinrichtung (31) dazu eingerichtet ist, bei einer Benutzerauswahl eines der aufgelisteten Dienste aus dem Dienstmenü zumindest ein Subsidiärmenü (65) zur über das Programm überlagerten Anzeige auf der Anzeige (14) zusammen mit lediglich dem ausgewählten Dienst der aufgelisteten Dienste zu erzeugen, um eine Vielzahl von Optionen zum Zugriff auf zumindest einen der empfangenen Kanäle für den Benutzer bereitzustellen.

2. Digitalfernsehsystem nach Anspruch 1, wobei die Erzeugungseinrichtung (31) dazu eingerichtet ist, die in dem Dienstmenü (61) enthaltene Liste von Diensten gemäß den Bezugsrechten des Benutzers zu variieren.

3. Digitalfernsehsystem nach Anspruch 1 oder 2, wobei die Erzeugungseinrichtung (31) dazu eingerichtet ist, die in dem Dienstmenü (61) enthaltene Liste von Diensten gemäß den Vorlieben des Benutzers zu ordnen.

4. Digitalfernsehsystem nach einem der vorstehenden Ansprüche, wobei die Decodierungseinrichtung (13) eine Empfangseinrichtung (28) zum Empfangen von Steuersignalen von einem Fernbedienungshandapparat (29) umfaßt.

5. Digitalfernsehsystem nach Anspruch 4, wobei die Erzeugungseinrichtung (31) dazu eingerichtet ist, das Dienstmenü (61) zur Anzeige auf der Anzeige (14) im Ansprechen auf die Betätigung einer einzelnen ausschließlich zugeordneten Taste (40) an dem Handapparat (29) zu erzeugen.

6. Digitalfernsehsystem nach Anspruch 4 oder 5, wobei die Erzeugungseinrichtung (31) dazu eingerichtet ist, im Ansprechen auf von Navigationstasten (42) des Handapparats (29) empfangene Befehle einen Bildlauf bei der Anzeige der in dem Dienstmenü (61) enthaltenen Liste von Diensten durchzuführen.

7. Digitalfernsehsystem nach Anspruch 6, wobei die Erzeugungseinrichtung (31) dazu eingerichtet ist, den Bildlauf bei dem Dienstmenü (61) um eine auf der Anzeige (14) angezeigte feste Leiste (62) herum durchzuführen.

8. Digitalfernsehsystem nach Anspruch 7, wobei die feste Leiste (62) Navigationspfeile aufweist, die die möglichen Richtungen der Bewegung des Dienstmenüs (61) zeigen.

9. Digitalfernsehsystem nach einem der vorstehenden Ansprüche, wobei die Erzeugungseinrichtung (31) dazu eingerichtet ist, bei einer Benutzerauswahl einer der Optionen aus dem Subsidiärmenü (65) ein zweites Subsidiärmenü (66) zur über das Programm überlagerten Anzeige auf der Anzeige (14) zusammen mit dem ausgewählten Dienst der aufgelisteten Dienste zu erzeugen, um eine Vielzahl von weiteren Optionen zum Zugriff auf den zumindest einen der empfangenen Kanäle für den Benutzer bereitzustellen.

10. Digitalfernsehsystem nach einem der vorstehenden Ansprüche, wobei die Decodierungseinrichtung (13) dazu eingerichtet ist, den auf der Anzeige (14) angezeigten Kanal im Ansprechen auf die Auswahl einer speziellen Option aus einem Subsidiärmenü (65, 66) zu ändern.

11. Digitalfernsehsystem nach Anspruch 10, wobei die Decodierungseinrichtung (13) dazu eingerichtet ist, in Abhängigkeit von der in einem Subsidiärmenü (65, 66) gewählten Option auf einen Dienstkanal aus den empfangenen Kanälen bei einem speziellen Bildschirm in dem Dienstkanal zuzugreifen.

12. Digitalfernsehsystem nach einem der vorstehenden Ansprüche, wobei die Menüs (61, 65, 66) regelmäßig aktualisierte Informationen umfassen, die zusammen mit dem Programm (60) ausgestrahlt werden, über das die Menüs überlagert werden.

13. Digitalfernsehsystem nach Anspruch 12, ferner mit einer Sendeeinrichtung (6) zum Ausstrahlen von Aktualisierungsinformationen für die Menüs (61, 65, 66) auf im wesentlichen allen Kanälen der Vielzahl von Kanälen.

14. Verfahren zum Zugriff auf zumindest einen Kanal einer Vielzahl von empfangenen Kanälen mit zumindest einem Kanal und einem Dienstkanal eines Digitalfernsehsystems, mit den Schritten:
Erzeugen eines Dienstmenüs (61) zur über ein auf einem der empfangenen Kanäle gesendetes Programm (60) überlagerten Anzeige auf einer Anzeige (14), wobei das Dienstmenü (61) eine Liste einer Vielzahl von für einen Benutzer verfügbaren Diensten umfaßt; wobei das Verfahren **gekennzeichnet ist durch**:
Erzeugen zumindest eines Subsidiärmenüs (65) zur über das Programm überlagerten Anzeige auf der Anzeige (14) zusammen mit lediglich dem ausgewählten Dienst der aufgelisteten Dienste bei einer Benutzerauswahl eines der aufgelisteten Dienste aus dem Dienstmenü, um eine Vielzahl von Optionen zum Zugriff auf zumindest einen der empfangenen Kanäle für den Benutzer bereitzustellen.

15. Verfahren nach Anspruch 14, wobei die in dem Dienstmenü (61) enthaltene Liste von Diensten gemäß den Bezugsrechten des Benutzers variiert wird.

16. Verfahren nach Anspruch 14 oder 15, wobei die in dem Dienstmenü (61) enthaltene Liste von Diensten gemäß den Vorlieben des Benutzers geordnet wird.

17. Verfahren nach einem der Ansprüche 14 bis 16, wobei Steuersignale von einem Fernbedienungshandapparat (29) empfangen werden.

18. Verfahren nach Anspruch 17, wobei das Dienstmenü (61) zur Anzeige auf der Anzeige (14) im Ansprechen auf die Betätigung einer einzelnen ausschließlich zugeordneten Taste (40) an dem Handapparat erzeugt wird.

19. Verfahren nach Anspruch 17 oder 18, wobei im Ansprechen auf von Navigationstasten (42) des Handapparats (29) empfangene Befehle ein Bildlauf bei der Anzeige der in dem Dienstmenü enthaltenen Liste von Diensten durchgeführt wird.

20. Verfahren nach Anspruch 19, wobei der Bildlauf bei dem Dienstmenü (61) um eine auf der Anzeige (14) angezeigte feste Leiste (62) herum durchgeführt wird.

21. Verfahren nach Anspruch 20, wobei die feste Leiste Navigationspfeile aufweist, die die möglichen Richtungen der Bewegung des Dienstmenüs (61) zeigen.

22. Verfahren nach einem der Ansprüche 14 bis 21, wobei bei einer Benutzerauswahl einer der Optionen aus dem Subsidiärmenü ein zweites Subsidiärmenü (66) zur über das Programm überlagerten Anzeige auf der Anzeige (14) zusammen mit dem ausgewählten Dienst der aufgelisteten Dienste erzeugt wird, um eine Vielzahl von weiteren Optionen zum Zugriff auf den zumindest einen der empfangenen Kanäle für den Benutzer bereitzustellen.

23. Verfahren nach einem der Ansprüche 14 bis 22, wobei der auf der Anzeige (14) angezeigten Kanal im Ansprechen auf die Auswahl einer speziellen Option aus einem Subsidiärmenü (65, 66) geändert wird.

24. Verfahren nach Anspruch 23, wobei in Abhängigkeit von der in einem Subsidiärmenü (65, 66) gewählten Option auf einen Dienstkanal aus den empfangenen Kanälen bei einem speziellen Bildschirm in dem Dienstkanal zugegriffen wird.

25. Verfahren nach einem der Ansprüche 14 bis 24, wobei die Menüs (61, 65, 66) regelmäßig aktualisierte Informationen umfassen, die zusammen mit dem Programm (60) ausgestrahlt werden, über das die Menüs überlagert werden.

## Revendications

1. Système de télévision numérique comprenant un décodeur (13) pour recevoir une pluralité de canaux comprenant au moins un canal et un canal de service, et un afficheur (14), le décodeur (13) comprenant :
un moyen (31) pour générer un menu de service (61) pour affichage sur ledit afficheur (14), superposé à un programme (60) transmis sur l'un desdits canaux reçus, ledit menu de service (61) comprenant une liste d'une pluralité de services disponibles pour un utilisateur ;
**caractérisé en ce que** ledit moyen de génération (31) est configuré de façon à générer, lors de la sélection par l'utilisateur de l'un desdits services énumérés dans le menu de service, au moins un menu auxiliaire (65) pour l'affichage sur ledit afficheur (14), superposé audit programme avec uniquement le service sélectionné parmi lesdits services énumérés, de façon à offrir à l'utilisateur une pluralité d'options pour accéder à au moins l'un desdits canaux reçus.

2. Système de télévision numérique selon la revendication 1, dans lequel le moyen de génération (31) est configuré de façon à faire varier la liste de services contenue dans le menu de service (61) en fonction des droits d'abonnement de l'utilisateur.

3. Système de télévision numérique selon la revendication 1 ou 2, dans lequel le moyen de génération (31) est configuré pour commander la liste de services contenue dans le menu de service (61) en fonction des préférences de l'utilisateur.

4. Système de télévision numérique selon l'une quelconque des revendications précédentes, dans lequel le décodeur (13) comprend un récepteur (28) pour recevoir des signaux de commande à partir d'une télécommande (29).

5. Système de télévision numérique selon la revendication 4, dans lequel le moyen de génération (31) est configuré pour générer le menu de service (61) pour l'affichage sur ledit afficheur (14) en réponse au toucher d'une touche spécialisée unique (40) sur la télécommande (29).

6. Système de télévision numérique selon la revendication 4 ou 5, dans lequel le moyen de génération (31) est configuré pour faire défiler l'affichage de la liste de services contenue dans le menu de service (61) en réponse à des ordres reçus à partir de touches de navigation (42) de la télécommande (29).

7. Système de télévision numérique selon la revendication 6, dans lequel le moyen de génération (31) est configuré pour faire défiler le menu de service (61) autour d'une barre fixe (62) affichée sur l'afficheur (14).

8. Système de télévision numérique selon la revendication 7, dans lequel la barre fixe (62) comprend des flèches de navigation montrant les directions de déplacement possibles du menu de service (61).

9. Système de télévision numérique selon l'une quelconque des revendications précédentes, dans lequel le moyen de génération (31) est configuré pour générer, lors de la sélection par l'utilisateur de l'une des options du menu auxiliaire (65), un deuxième menu auxiliaire (66) pour l'affichage sur ledit afficheur (14), superposé audit programme avec le service sélectionné parmi lesdits services énumérés afin d'offrir à l'utilisateur une pluralité d'autres options pour l'accès audit canal au nombre d'au moins un parmi lesdits canaux reçus.

10. Système de télévision numérique selon l'une quelconque des revendications précédentes, dans lequel le décodeur (13) est configuré pour changer le canal affiché sur ledit afficheur (14) en réponse à la sélection d'une option particulière à partir d'un menu auxiliaire (65, 66).

11. Système de télévision numérique selon la revendication 10, dans lequel le décodeur (13) est adapté pour accéder, à partir desdits canaux reçus, à un canal de service sur un écran d'affichage particulier à l'intérieur de ce canal de service en fonction de l'option choisie à l'intérieur d'un menu auxiliaire (65, 66).

12. Système de télévision numérique selon l'une quelconque des revendications précédentes, dans lequel lesdits menus (61, 65, 66) contiennent une information régulièrement mise à jour diffusée avec le programme (60) sur lequel sont superposés les menus.

13. Système de télévision numérique selon la revendication 12, comprenant de plus un moyen de transmission (6) pour la diffusion d'informations de remise à jour pour lesdits menus (61, 65, 66) sur la quasi-totalité de ladite pluralité de canaux.

14. Procédé pour accéder à au moins l'un parmi une pluralité de canaux reçus comprenant au moins un canal et un canal de service d'un système de télévision numérique, ledit procédé comprenant les étapes consistant à :
générer un menu de service (61) pour l'affichage sur un afficheur (14), superposé à un programme (60) transmis sur l'un desdits canaux reçus, ledit menu de service (61) comprenant une liste d'une pluralité de services disponibles à un utilisateur, ledit procédé étant **caractérisé par** :
la génération, lors de la sélection par l'utilisateur de l'un desdits services énumérés à partir du menu de service, d'au moins un menu auxiliaire (65) pour affichage sur ledit afficheur (14), superposé audit programme avec uniquement le service sélectionné parmi lesdits services énumérés afin d'offrir à l'utilisateur une pluralité d'options pour accéder à au moins l'un desdits canaux reçus.

15. Procédé selon la revendication 14, dans lequel la liste de services contenue dans le menu de service (61) varie en fonction des droits d'abonnement de l'utilisateur.

16. Procédé selon la revendication 14 ou 15, dans lequel la liste de services contenue dans le menu de service (61) est commandée en fonction des préférences de l'utilisateur.

17. Procédé selon l'une quelconque des revendications 14 à 16, dans lequel des signaux de commande sont reçus à partir d'une télécommande (29).

18. Procédé selon la revendication 17, dans lequel le menu de service (61) est généré pour affichage sur ledit afficheur (14) en réponse au toucher d'une touche spécifique unique (40) sur la télécommande.

19. Procédé selon la revendication 17 ou 18, dans lequel l'affichage de la liste de services contenue dans le menu de service défile en réponse à des ordres reçus à partir de touches de navigation (42) de la télécommande (29) .

20. Procédé selon la revendication 19, dans lequel le menu de service (61) défile autour d'une barre fixe (62) affichée sur l'afficheur (14).

21. Procédé selon la revendication 20, dans lequel la barre fixe comprend des flèches de navigation montrant les directions de déplacement possibles du menu de service (61).

22. Procédé selon l'une quelconque des revendications 14 à 21, dans lequel, lors de la sélection par l'utilisateur de l'une desdites options à partir du menu auxiliaire, un deuxième menu auxiliaire (66) est généré pour affichage sur ledit afficheur (14), superposé audit programme, avec le service sélectionné parmi lesdits services énumérés, de façon à offrir à l'utilisateur une pluralité d'autres options pour accéder à au moins un desdits canaux reçus.

23. Procédé selon l'une quelconque des revendications 14 à 22, dans lequel le canal affiché sur ledit afficheur (14) est changé en réponse à la sélection d'une option particulière à partir d'un menu auxiliaire (65, 66).

24. Procédé selon la revendication 23, dans lequel, à partir des canaux reçus, on accède à un canal de service sur un écran d'affichage particulier à l'intérieur de ce canal de service en fonction de l'option choisie à l'intérieur d'un menu auxiliaire (65, 66).

25. Procédé selon l'une quelconque des revendications 14 à 24, dans lequel lesdits menus (61, 65, 66) contiennent de l'information régulièrement mise à jour diffusée avec le programme (60) sur lequel sont superposés les menus.
